# EUROPEAN PATENT SPECIFICATION

(11) **EP 3 238 583 B1**
(45) Date of publication and mention of the grant of the patent: **04.03.2020**
(21) Application number: 17167692.7
(22) Date of filing: 24.04.2017
(51) Int. Cl.: A47J 42/06

(54) **BEAN GRINDING MACHINE**
MASCHINE ZUM MAHLEN VON BOHNEN
MACHINE DE BROYAGE DE GRAINS

(30) Priority: 27.04.2016 CN 201610267932
(43) Date of publication of application: 01.11.2017
(73) Proprietor: Tsann Kuen (Zhangzhou) Enterprise Co., Ltd., Fujian 363107 (CN)
(72) Inventor: XUE, Zhiqiang, Fujian, 363107 (CN); LIU, Shangkun, Fujian, 363107 (CN); ZHANG, Yanxiang, Fujian, 363107 (CN); CHEN, Honghai, Fujian, 363107 (CN)
(74) Representative: Regimbeau

(56) References cited:
- FR-A- 895 815
- FR-A1- 2 387 011
- NL-A- 7 605 678
- US-A- 4 082 234

## Description

The disclosure relates to a bean grinding machine, and more particularly to a bean grinding machine with two grinding members cooperatively operated for grinding coffee beans or the like into a powder.

A conventional bean grinding machine generally includes a base seat, a bean container mounted on the base seat for receiving coffee beans, and a grinding assembly mounted on the base seat, and including an upper grinding member and a lower grinding member cooperatively operated for grinding coffee beans into a powder. The upper grinding member is removable from the base seat to be cleaned, while the lower grinding member, which is disposed to be rotatable relative to the upper grinding member for grinding work, cannot be detached from the base seat. As such, bean powder residues remaining in the grinding machine may easily get mildewed and cause bad odor.

For example, in FR 895 815 A, a coffee grinder is disclosed and has a base, a motor housing fixed on the base, a case disposed at a side of the motor housing for a drive transmission mounted therein, and a grinding mechanism having two grinding halves for grinding coffee beans.

Therefore, an object of the disclosure is to provide a bean grinding machine that can alleviate at least one of the drawbacks of the prior art. The invention relates to a bean grinding machine according to independent claim 1.

According to the disclosure, the bean grinding machine includes a base seat, a bean container mounted on the base seat, and a grinding mechanism removably mounted on the base seat. The grinding mechanism includes a first grinding member and a second grinding member which are rotatable relative to and cooperate with each other to define a grinding space for receiving beans introduced from the bean container. Both the first and second grinding members can be removed from the base seat for facilitating cleaning.

Other features and advantages of the disclosure will become apparent in the following detailed description of the embodiment with reference to the accompanying drawings, of which:
FIG. 1 is a perspective view of an embodiment of a bean grinding machine according to the disclosure;
FIG. 2 is a sectional view of the embodiment in which a bean container and a grinding mechanism are disengaged from a base seat;
FIG. 3 is a sectional view of the embodiment in which the bean container and the grinding mechanism are engaged with the base seat;
FIG. 4 is a fragmentary sectional view of a portion of the embodiment in a state where a second anchoring member is in a locking position;
FIG. 5 is a sectional view of the grinding mechanism of the embodiment;
FIG. 6 is a fragmentary perspective view of a portion of the embodiment;
FIG. 7 is a fragmentary, exploded perspective view of a portion of the embodiment;
FIG. 8 is a perspective view illustrating a structural relationship among a driven gear, a driving gear and a transmitting gear of the embodiment;
FIG. 9 is a fragmentary sectional view of a portion of the embodiment in a state where the second anchoring member is in an unlocking position;
FIG. 10 is a fragmentary sectional view of a portion of the embodiment illustrating when the grinding mechanism is being mounted on the base seat;
FIGS. 11 and 12 are fragmentary sectional views illustrating a downward movement of a first grinding member;
FIG. 13 is a fragmentary perspective view of a bean container and a second micro switch of the embodiment; and
FIGS. 14 and 15 are fragmentary, cross-sectional views illustrating when the bean container is being mounted on the base seat and actuating the second micro switch.

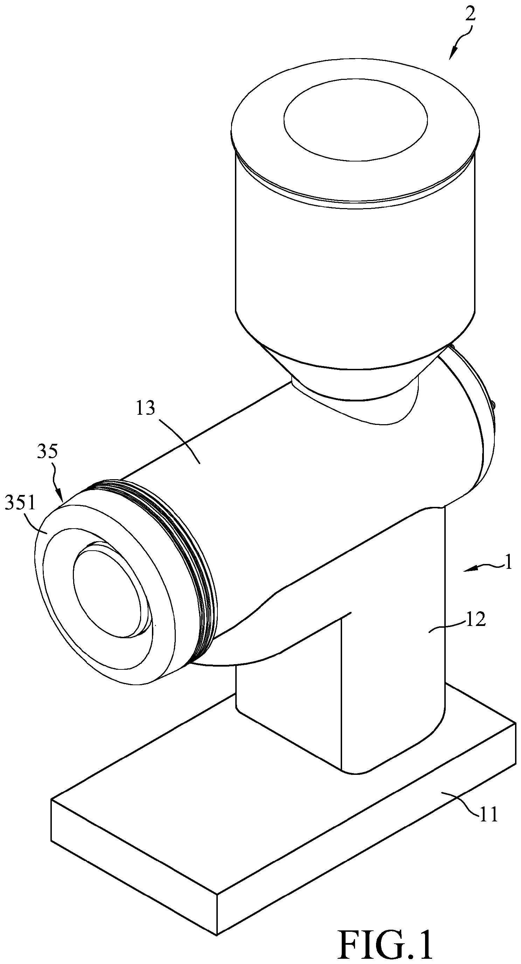

Referring to FIGS. 1 to 3, an embodiment of a bean grinding machine includes abase seat 1, a bean container 2, a grinding mechanism 3, a power mechanism 4, a locking mechanism 5, a first micro switch 6 and a second micro switch 7.

The base seat 1 includes a base wall 11 for standing on a surface, a surrounding wall 12 extending upwardly from the base wall 11 and configured to define an accommodation space 120 for mounting the power mechanism 4 therein, and a mounting wall 13 connected with the surrounding wall 12 and extending in a horizontal direction to define a mounting space 130 for mounting the grinding mechanism 3 therein and to terminate at a lateral opening 131 for access to the mounting space 130. The mounting wall 13 has an upper opening 132 disposed to be in spatial intercommunication between the mounting space 130 and the bean container 2.

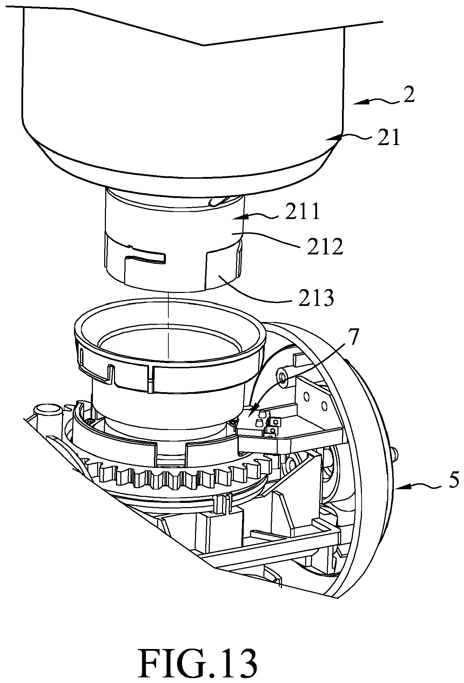

The bean container 2 is removably connected to the upper opening 132 to be disposed upwardly of the grinding mechanism 3. The bean container 2 includes a container body 21 and a cap 22. The container body 21 defines therein a containing space 210 in spatial communication with the mounting space 130 for dispensing coffee beans into the mounting space 130 by gravity. Referring to FIG. 13, the container body 21 has an annular neck 211 having a groove 213 in an outer surface 212 thereof.

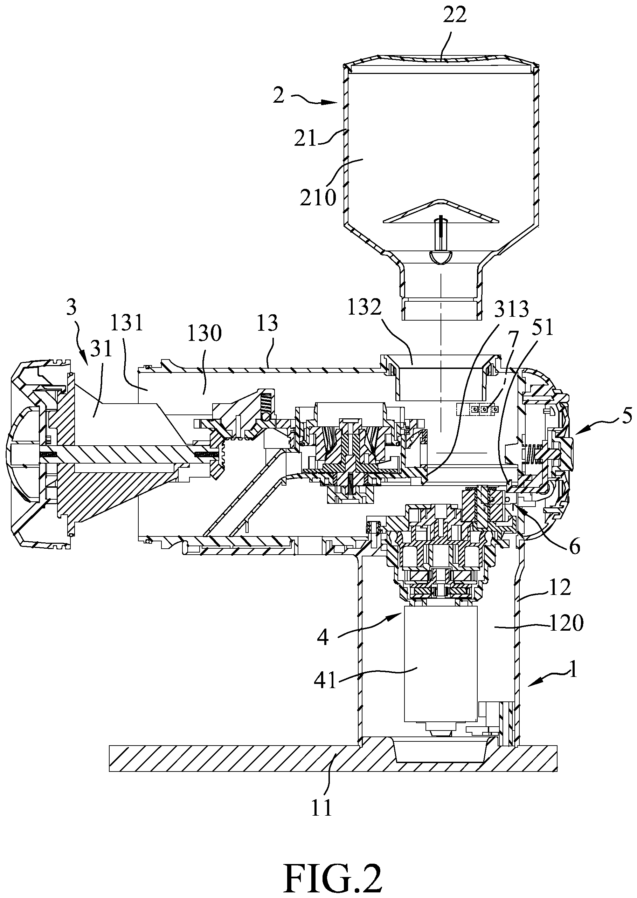

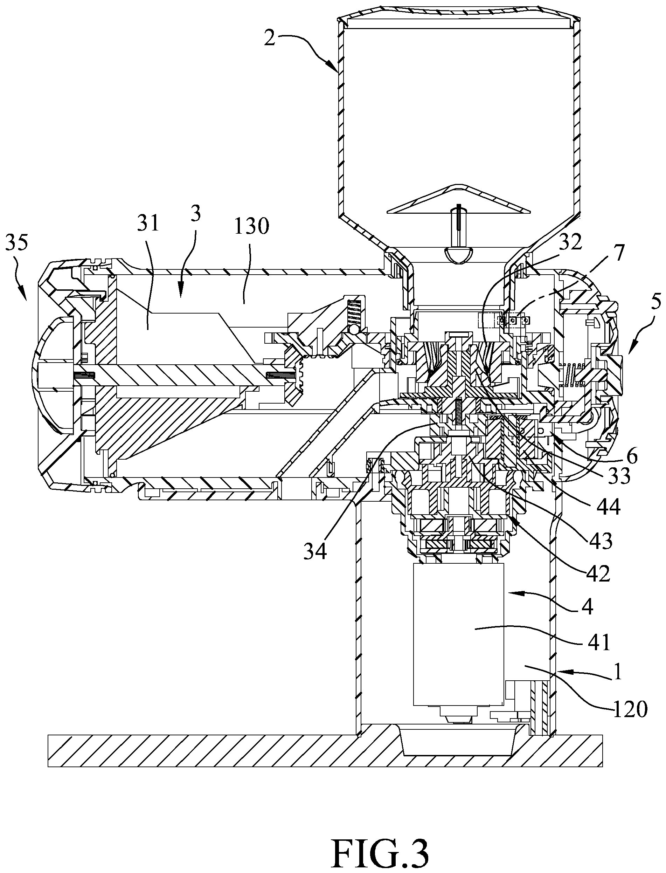

Referring to FIGS. 2 and 3, the grinding mechanism 3 is mounted in the mounting space 130, and is disengageable from the base seat 1 in the horizontal direction so as to be removed from the mounting space 130 through the lateral opening 131. The grinding mechanism 3 includes a mounting frame 31, first and second grinding members 32, 33 which are mounted on the mounting frame 31 and which are rotatable relative to and cooperate with each other to define a grinding space 30 for receiving coffee beans introduced from the bean container 2, a driven gear 34 which is disposed to couple the second grinding member 33 with the power mechanism 4, and a particle size adjusting unit 35.

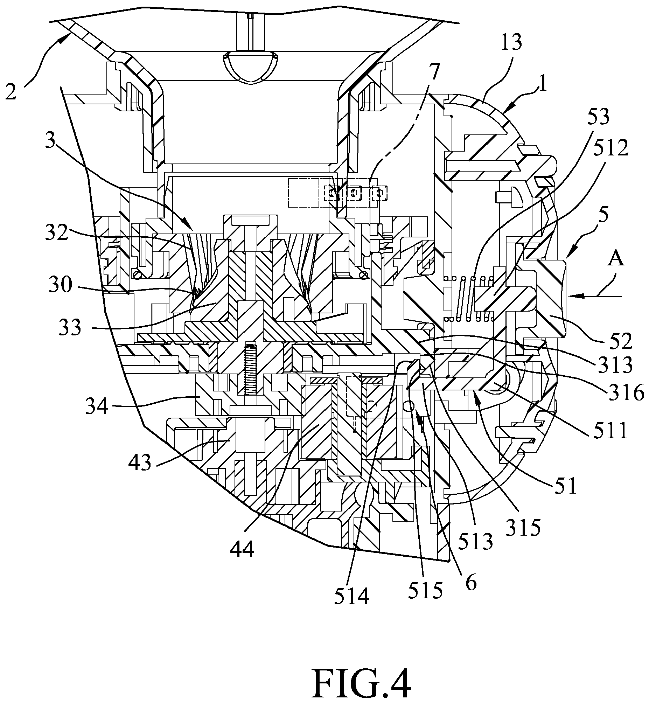

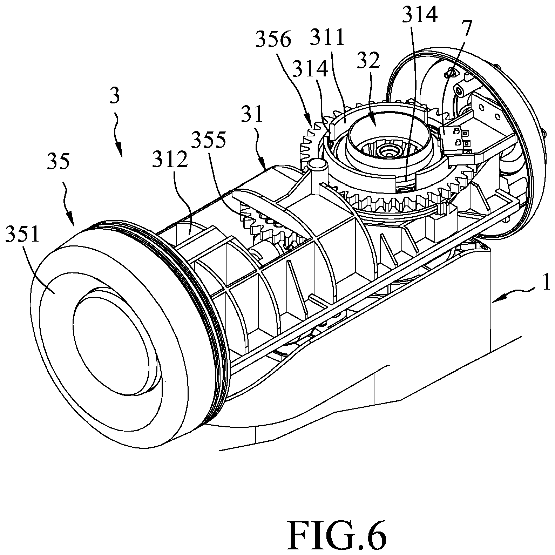

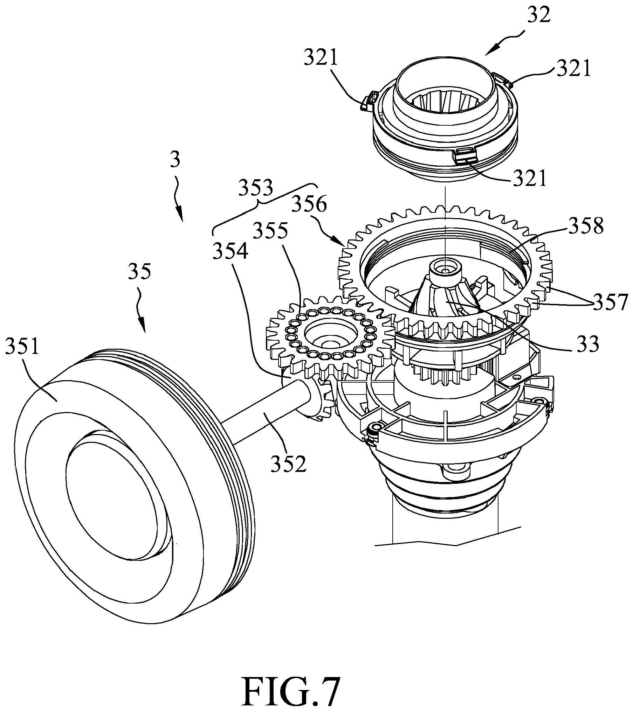

Referring to FIGS. 4 to 7, the mounting frame 31 includes a first mounting portion 311 for mounting the first grinding member 32 thereon, a second mounting portion 312 connected to a lateral side of the first mounting portion 311 for mounting the particle size adjusting unit 35 thereon, and a first anchoring member 313 projecting from the first mounting portion 311 toward the locking mechanism 5. The first mounting portion 311 has a plurality of key slots 314 spaced apart from each other. The first anchoring member 313 has a downwardly extending end portion in a form of a dog structure which has a first leading surface 315 facing and inclined toward the locking mechanism 5, and a first trailing surface 316 extending uprightly from the first leading surface 315. The first grinding member 32 is disengageable from the mounting frame 31, and is disposed to surround the second grinding member 33. The first grinding member 32 includes a plurality of radially extending keys 321 in a spline engagement with the key slots 314 such that the first grinding member 32 is non-rotatably mounted on the mounting frame 31.

The particle size adjusting unit 35 has a rotary shaft 352 which is rotatably mounted on the second mounting portion 312 about a horizontal axis and which has an operated end 351 in the form of an adjusting knob that is disposed adjacent to the lateral opening 131 (see FIG. 2) for being manually operable, and a bevel gear assembly 353 which interconnects the rotary shaft 352 and the first grinding member 32 to convert a rotational drive of the rotary shaft 352 about the horizontal axis into a rotational drive about an upright axis so as to move the first grinding member 32 along the upright axis . Specifically, the bevel gear assembly 353 includes a first bevel gear 354 coupled to and rotated with the rotary shaft 352 about the horizontal axis, a second bevel gear 355 having a bevel gear portion 3551 which meshes with the first bevel gear 354 and a transition gear portion 3552 which is disposed coaxially with the bevel gear portion 3551, and an adjusting annular seat 356 having an annular toothed portion 357 which meshes with the transition gear portion 3552 to be rotated about the upright axis, and an internally threaded portion 358 which is disposed coaxially with the annular toothed portion 357. Since the first grinding member 32 is non-rotatably mounted on the mounting frame 31, and is threadedly engaged with the internally threaded portion 358, rotation of the adjusting annular seat 356 about the upright axis results in movement of the first grinding member 32 along the upright axis so as to vary a size of the grinding space 30 between the first and second grinding members 32, 33.

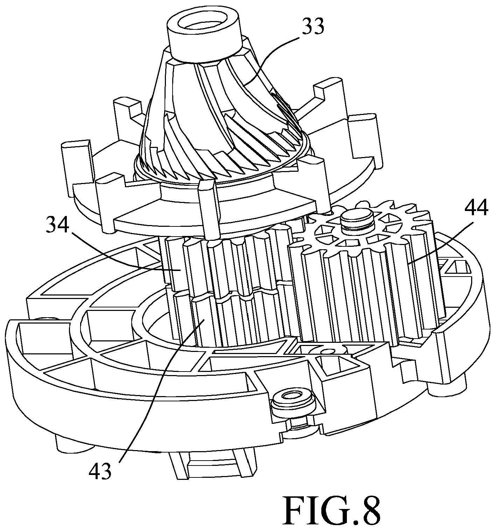

Referring to FIGS. 3, 4 and 8, the power mechanism 4 is mounted in the accommodation space 120 of the base seat 1, and includes a power motor 41, a reduction gear assembly 42 driven by the power motor 41 to have a rotational drive with a required torque, a driving gear 43 coupled with the reduction gear assembly 42 to receive the rotational drive, and a transmitting gear 44 which meshes with the driving gear 43 and the driven gear 34 of the grinding mechanism 3 so as to transmit a rotational drive received from the transmitting gear 44 to rotate the second grinding member 33 relative to the first grinding member 32.

Referring to FIGS. 2, 4 and 9, the locking mechanism 5 is mounted on the mounting wall 13 of the base seat 1 and opposite to the lateral opening 131 in the horizontal direction to lock the grinding mechanism 3 to the base seat 1. The locking mechanism 3 includes a second anchoring member 51, an operated member 52 and a biasing member 53.

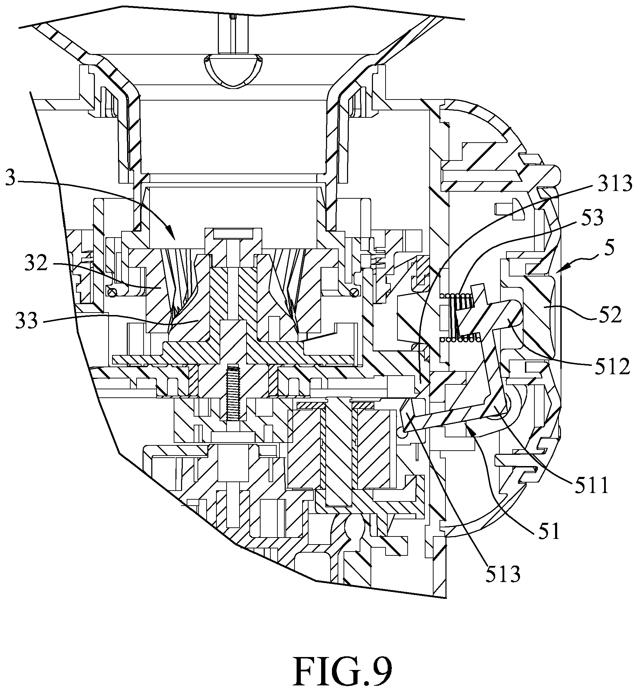

The second anchoring member 51 is disposed to be movable relative to the base seat 1 between a locking position, as shown in FIG. 4, where the second anchoring member 51 is engaged with the first anchoring member 313 to retain the grinding mechanism 3 in the mounting space 130, and an unlocking position, as shown in FIG. 9, where the second anchoring member 51 is disengaged from the first anchoring member 313 so as to permit disengagement of the grinding mechanism 3 from the base seat 1. Specifically, the second anchoring member 51 has a fulcrum portion 511 pivotally mounted on the base seat 511, and a driven portion 512 and an anchoring portion 513 which are disposed at opposite ends of the fulcrum portion 511 and respectively engageable with the operated member 52 and the first anchoring member 313, such that turning of the fulcrum portion 511 by operating the operated member 52 results in disengagement of the anchoring portion513 from the first anchoring member 313 to move the second anchoring member 51 to the unlocking position. The anchoring portion 513 has a second trailing surface 514 facing and inclined toward the first anchoring member 313, and a second leading surface 515 extending uprightly from the second trailing surface 514.

The operated member 52 is movably mounted on the mounting wall 13 and is engaged with the driven portion 512 such that the operated member 52 can be pressed in a direction indicated by arrow (A) of FIG. 4 toward the grinding mechanism 3 to bring the second anchoring member 51 to turn to the unlocking position as shown in FIG. 9.

The biasing member 53 is in the form of a biasing spring which is disposed between the second anchoring member 51 and a wall of the base seat 1 to bias the second anchoring member 51 toward the locking position.

The first micro switch 6 is disposed in the mounting space 130 and adjacent to the second anchoring member 51, and is actuated by the grinding mechanism 3 when mounting of the grinding mechanism 3 on the base seat 1 is completed. The second micro switch 7 is disposed in the mounting space 130 and adjacent to the upper opening 132, and is actuated by the bean container 2 when mounting of the bean container 3 on the base seat 1 is completed. With such a structure, only when both the grinding mechanism 3 and the bean container 2 are mounted correctly on the base seat 1, the first and second micro switches 6, 7 can be actuated to bring a circuit (not shown) in the bean grinding machine to an ON-state for conducting a grinding work.

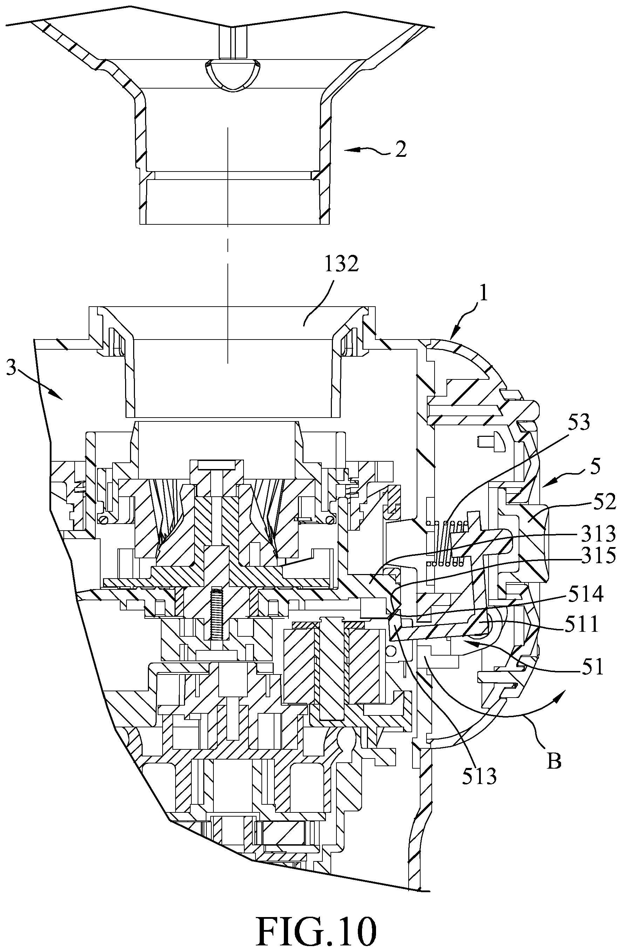

Referring to FIGS. 2, 4 and 10, in assembly, the grinding mechanism 3 is inserted into the mounting space 130 through the lateral opening 131 (as shown in FIG. 2) toward the locking mechanism 5 (as shown in FIG. 10) . Then, by slightly turning the second anchoring member 51 in a direction of arrow (B) to lower the anchoring portion 513 so as to pass the first leading surface 315 over the second trailing surface 514, the first trailing surface 316 is brought in abutment against the second leading surface 515, following returning of the second anchoring member 51 to the locking position by means of the biasing member 53, so as to retain the first anchoring member 313 to the second anchoring member 51. In this state, the driven gear 34 meshes with the transmitting gear 44 of the power mechanism 4 in the accommodation space 120, and the first micro switch 6 is actuated.

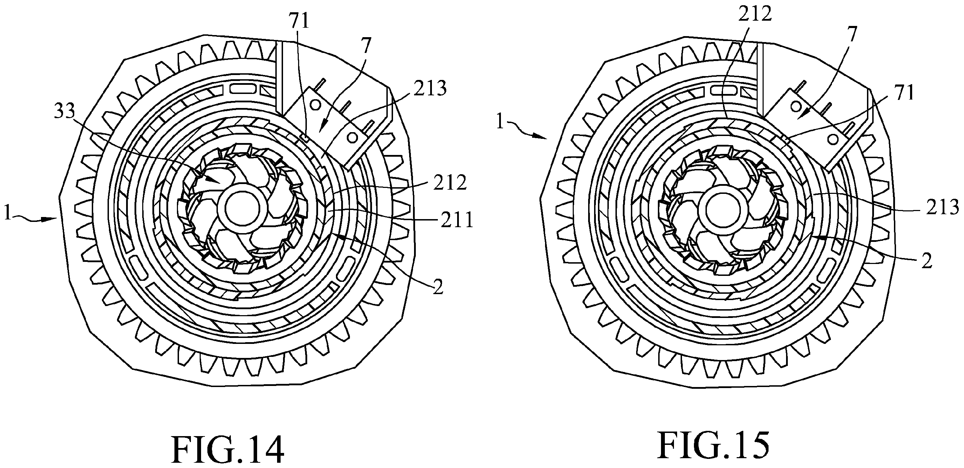

Referring to FIGS. 2, 3, 13 to 15, the annular neck 211 of the bean container 2 is inserted into the mounting space 130 from the upper opening 132 to align the groove 213 with a protrusion 71 of the second micro switch 7 (as shown in FIGS. 14 and 15). At this stage, the bean container 2 is not in contact with the second micro switch 7, as shown in FIG. 14. Subsequently, the bean container 2 is turned clockwise to retain thereof to the base seat 1 in a known manner, and to permit the outer surface 212 of the neck 211 to contact the second micro switch 7 for actuating the second micro switch 7, as shown in FIG. 15.

In use, a given amount of coffee beans in the containing space 210 of the bean container 2 is transported to the grinding space 30 by gravity. The power motor 41 is actuated to rotate the second grinding member 33 relative to the first grinding member 32 for grinding the coffee beans into a powder.

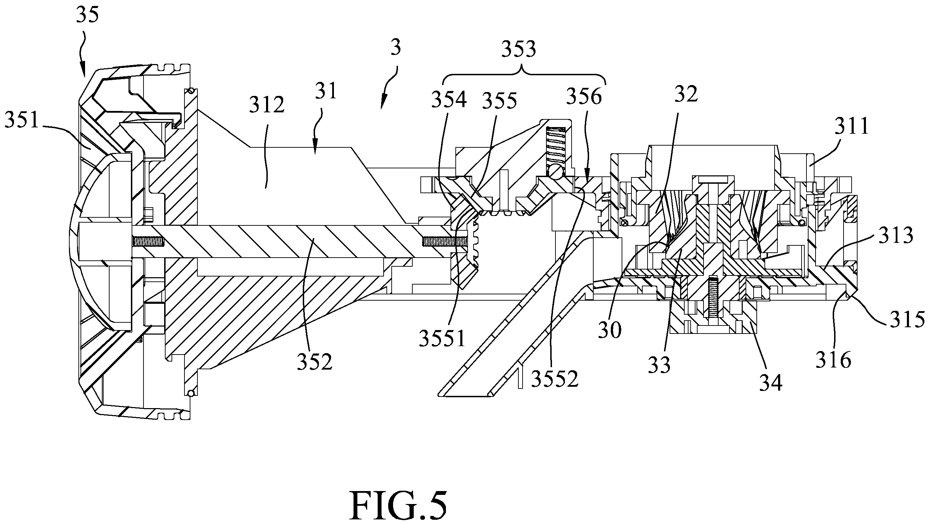

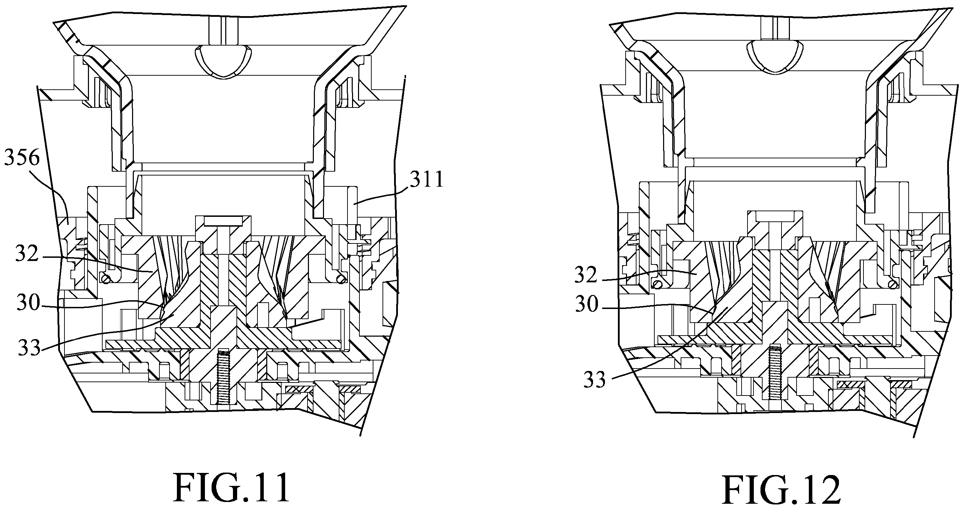

Referring to FIGS. 5, 6, 11 and 12, when it is desired to adjust the size of ground powder, the operated end 351 of the particle size adjusting unit 35 is turned about the horizontal axis of the rotary shaft 352 to drive rotation of the adjusting annular seat 356 about the upright axis through the first and second bevel gears 354, 355. Thus, the first grinding member 32, which is non-rotatably mounted on the mounting frame 31 and which is threadedly engaged with the adjusting annular seat 356, is moved along the upright axis by the rotation of the adjusting annular seat 356 so as to vary a size of the grinding space 30 for adjusting the size of ground powder of the beans. FIG. 12 illustrates the state that the first grinding member 32 is lowered to reduce the size of the grinding space 30 from the state shown in FIG. 11.

Referring to FIGS. 2, 4 and 9, the bean container 2 can be removed from the base seat 1 by counterclockwise turning and upwardly moving the bean container 2 through the upper opening 132. Subsequently, the operated member 52 is pushed by a user to turn the second anchoring member 51 to the unlocking position, as shown in FIG. 9, where the anchoring portion 513 is disengaged from the first anchoring member 313. The user can horizontally move the grinding mechanism 3 along the mounting space 130 to remove the same outwardly of the base seat 1 for cleaning. Further, the first grinding member 32 can be disengaged from the mounting frame 31 for facilitating cleaning. Also, a cutter (not shown) of the second grinding member 33 can be disposed to be removable therefrom for facilitating cleaning.

As illustrated, with the grinding mechanism 3 removably mounted on the base seat 1, the first and second grinding members 32, 33 can be removed from the base seat 1 to be readily cleaned to prevent the ground powder from remaining in the grinding mechanism 3. Besides, with such a construction, the grinding mechanism 3 is easy to be assembled and disassembled, and is retained firmly to the base seat 1 by means of the locking mechanism 5.

## Claims

1. A bean grinding machine comprising:
a base seat (1);
a bean container (2) mounted on said base seat (1) for containing beans to be ground; and
a grinding mechanism (3), wherein:
said grinding mechanism (3) is removably mounted on said base seat (1), and includes a first grinding member (32) and a second grinding member (33) which are rotatable relative to and cooperate with each other to define a grinding space (30) for receiving the beans introduced from said bean container (2);
said grinding mechanism (3) including a mounting frame (31) on which said first and second grinding members (32, 33) are mounted, said first grinding member (32) being disengageable from said mounting frame (31) ;
**characterized in**
said bean grinding machine further comprising a locking mechanism (5) which is disposed on said base seat (1) to lock said grinding mechanism (3) to said base seat (1), said mounting frame (31) having a first anchoring member (313), said locking mechanism (3) including a second anchoring member (51) which is disposed to be movable relative to said base seat (1) between a locking position, where said second anchoring member (51) is engaged with said first anchoring member (313) to retain said grinding mechanism (3) on said base seat (1), and an unlocking position, where said second anchoring member (51) is disengaged from said first anchoring member (313) so as to permit disengagement of said grinding mechanism (3) from said base seat (1).

2. The bean grinding machine as claimed in Claim 1, **characterized in that**: said grinding mechanism (3) is mounted on said base seat (1) such that said grinding mechanism (3) is disengageable from said base seat (1) in a horizontal direction.

3. The bean grinding machine as claimed in Claim 1, **characterized in that**: said locking mechanism (3) includes an operated member (52) disposed to be operated to move said second anchoring member (51) to the unlocking position, said second anchoring member (51) having a fulcrum portion (511) pivotally mounted on said base seat (511), and a driven portion (512) and an anchoring portion (513) which are disposed at opposite ends of said fulcrum portion (511) and respectively engage able with said operated member (52) and said first anchoring member (313), such that turning of said fulcrum portion (511) by operating said operated member (52) results in disengagement of said anchoring portion (513) from said first anchoring member (313).

4. The bean grinding machine as claimed in Claim 3, **characterized in that**: said locking mechanism (5) includes a biasing member (53) disposed to bias said second anchoring member (51) toward the locking position.

5. The bean grinding machine as claimed in Claim 4, **characterized in that**: said first anchoring member (313) has a first leading surface (315) facing and inclined toward said second anchoring member (51), and a first trailing surface (316) extending uprightly from said first leading surface (315), said anchoring portion (513) having a second trailing surface (514) facing and inclined toward said first anchoring member (313), and a second leading surface (515) extending uprightly from said second trailing surface (514) such that said first trailing surface (316) is brought in abutment against said second leading surface (515) by passing said first leading surface (315) over said second trailing surface (514) so as to retain said first anchoring member (313) to said second anchoring member (51) when said second anchoring member (51) is in the locking position.

6. The bean grinding machine as claimed in Claim 1, **characterized in that**: said base seat (1) includes a mounting wall (13) configured to define a mounting space (130) for mounting said grinding mechanism (3) therein, and a lateral opening (131) for access to said mounting space (130) such that said grinding mechanism (3) is removable from said mounting space (130) in a horizontal direction through said lateral opening (131).

7. The bean grinding machine as claimed in Claim 6, further **characterized by** a power mechanism (4), said base seat (1) further including a base wall (11) for standing on a surface, and a surrounding wall (12) extending upwardly from said base wall (11) and configured to define an accommodation space (120) for mounting said power mechanism (4) therein, said bean grinding machine further comprising a locking mechanism (5) which is mounted on said mounting wall (13) and remote from said lateral opening (131) in the horizontal direction.

8. The bean grinding machine as claimed in Claim 1, **characterized in that**: said first grinding member (32) is non-rotatably mounted on said mounting frame (31) and surrounds said second grinding member (33), said second grinding member (33) being rotatably mounted on said mounting frame (31), said bean grinding machine further comprising a power mechanism (4) which is mounted on said base seat (1), said power mechanism (4) including a driving gear (43) which is disposed to receive a rotational drive from a power source, and a transmitting gear (44) which meshes with said driving gear (43), said grinding mechanism (3) further including a driven gear (34) which meshes with said transmitting gear (44) to transmit a rotational drive received from said transmitting gear (44) to rotate said second grinding member (33).

9. The bean grinding machine as claimed in Claim 1, **characterized in that**: said grinding mechanism (3) further includes a particle size adjusting unit (35) disposed to move said first grinding member (32) relative to said second grinding member (33) along an upright axis so as to vary a size of said grinding space (30), said particle size adjusting unit (35) having a rotary shaft (352) which is rotatably mounted on said mounting frame (31) about a horizontal axis and which has an operated end (351) for being manually operable, and a bevel gear assembly (353) which interconnects said rotary shaft (352) and said first grinding member (32) to convert a rotational drive of said rotary shaft (352) about the horizontal axis into a rotational drive about the upright axis so as to move said first grinding member (32) along the upright axis.

10. The bean grinding machine as claimed in Claim 9, **characterized in that**: said bevel gear assembly (353) includes a first bevel gear (354) coupled to and rotated with said rotary shaft (352) about the horizontal axis, a second bevel gear (355) having a bevel gear portion (3551) which meshes with said first bevel gear (354) and a transition gear portion (3552) which is disposed coaxially with said bevel gear portion (3551), and an adjusting annular seat (356) having an annular toothed portion (357) which meshes with said transition gear portion (3552) to be rotated about the upright axis, and an internally threaded portion (358) which is disposed coaxially with said annular toothed portion (357), said first grinding member (32) being non-rotatably mounted on said mounting frame (31) and threadedly engaged with said internally threaded portion (358) such that rotation of said adjusting annular seat (356) about the upright axis results in movement of said first grinding member (32) along the upright axis.

11. The bean grinding machine as claimed in Claim 1, further **characterized by** a first micro switch (6) disposed on said base seat (1) and actuated by said grinding mechanism (3) when mounting of said grinding mechanism (3) on said base seat (1) is completed.

12. The bean grinding machine as claimed in Claim 11, **characterized in that**: said bean container (2) is removably mounted on said base seat (1), and further comprising a second micro switch (7) disposed on said base seat (1) and actuated by said bean container (3) when mounting of said bean container (3) on said base seat (1) is completed.

13. The bean grinding machine as claimed in Claim 12, **characterized in that**: said base seat (1) includes a mounting wall (13) configured to define a mounting space (130) for mounting said grinding mechanism (3) therein, a lateral opening (131) for access to said mounting space (130) such that said grinding mechanism (3) is removable from said mounting space (130) in a horizontal direction through said lateral opening (131), and an upper opening (132) disposed to be in spatial intercommunication between said mounting space (130) and said bean container (2).

## Patentansprüche

1. Bohnenmahlmaschine, die Folgendes umfasst:
einen Basissitz (1);
einen Bohnenbehälter (2), der zum Enthalten von Bohnen, die zu mahlen sind, am Basissitz (1) montiert ist; und
einen Mahlmechanismus (3), wobei:
der Mahlmechanismus (3) entfernbar am Basissitz (1) montiert ist und ein erstes Mahlelement (32) und ein zweites Mahlelement (33) beinhaltet, die relativ zueinander rotierbar sind und miteinander zusammenwirken, um einen Mahlraum (30) zum Aufnehmen der Bohnen, die vom Bohnenbehälter (2) eingeführt werden, zu definieren;
der Mahlmechanismus (3) einen Montagerahmen (31) beinhaltet, an dem das erste und das zweite Mahlelement (32, 33) montiert sind, wobei das erste Mahlelement (32) aus dem Montagerahmen (31) ausrückbar ist;
**dadurch gekennzeichnet, dass** die Bohnenmahlmaschine ferner einen Verriegelungsmechanismus (5) umfasst, der am Basissitz (1) angeordnet ist, um den Mahlmechanismus (3) am Basissitz (1) zu verriegeln, wobei der Montagerahmen (31) ein erstes Verankerungselement (313) aufweist, wobei der Verriegelungsmechanismus (3) ein zweites Verankerungselement (51) beinhaltet, das angeordnet ist, zwischen einer Verriegelungsposition, in der das zweite Verankerungselement (51) in das erste Verankerungselement (313) eingerückt ist, um den Mahlmechanismus (3) am Basissitz (1) zu halten, und einer Entriegelungsposition, in der das zweite Verankerungselement (51) aus dem ersten Verankerungselement (313) ausgerückt ist, um das Ausrücken des Mahlmechanismus (3) aus dem Basissitz (1) zu erlauben, relativ zum Basissitz (1) bewegbar zu sein.

2. Bohnenmahlmaschine nach Anspruch 1, **dadurch gekennzeichnet, dass**: der Mahlmechanismus (3) derart am Basissitz (1) montiert ist, dass der Mahlmechanismus (3) in eine horizontale Richtung aus dem Basissitz (1) ausrückbar ist.

3. Bohnenmahlmaschine nach Anspruch 1, **dadurch gekennzeichnet, dass**: der Verriegelungsmechanismus (3) ein Betätigungselement (52) beinhaltet, das angeordnet ist, betätigt zu werden, um das zweite Verankerungselement (51) in die Entriegelungsposition zu bewegen, das zweite Verankerungselement (51) einen Drehpunktabschnitt (511), der schwenkbar am Basissitz (511) montiert ist, sowie einen angetriebenen Abschnitt (512) und einen Verankerungsabschnitt (513), die an gegenüberliegenden Enden des Drehpunktabschnitts (511) angeordnet und jeweils in das Betätigungselement (52) und das erste Verankerungselement (313) einrückbar sind, derart, dass ein Drehen des Drehpunktabschnitts (511) durch Betätigen des Betätigungselements (52) im Ausrücken des Verankerungsabschnitts (513) aus dem ersten Verankerungselement (313) resultiert, beinhaltet.

4. Bohnenmahlmaschine nach Anspruch 3, **dadurch gekennzeichnet, dass**: der Verriegelungsmechanismus (5) ein Vorspannelement (53) beinhaltet, das angeordnet ist, das zweite Verankerungselement (51) zur Verriegelungsposition hin vorzuspannen.

5. Bohnenmahlmaschine nach Anspruch 4, **dadurch gekennzeichnet, dass**: das erste Verankerungselement (313) eine erste vordere Fläche (315), die dem zweiten Verankerungselement (51) zugewandt und zu diesem geneigt ist, und eine erste hintere Fläche (316), die sich von der ersten vorderen Fläche (315) aufrecht erstreckt, aufweist, wobei der Verankerungsabschnitt (513) eine zweite hintere Fläche (514), die dem ersten Verankerungselement (313) zugewandt und zu diesem geneigt ist, und eine zweite vordere Fläche (515) aufweist, die sich von der zweiten hinteren Fläche (514) aufrecht erstreckt, derart, dass die erste hintere Fläche (316) gegen die zweite vordere Fläche (515) in Anschlag gebracht wird, indem die erste vordere Fläche (315) über die zweite hintere Fläche (514) geführt wird, um das erste Verankerungselement (313) am zweiten Verankerungselement (51) zu halten, wenn sich das zweite Verankerungselement (51) in der Verriegelungsposition befindet.

6. Bohnenmahlmaschine nach Anspruch 1, **dadurch gekennzeichnet, dass**: der Basissitz (1) eine Montagewand (13), die dazu ausgelegt ist, einen Montageraum (130) zum Montieren des Mahlmechanismus (3) darin zu definieren, und eine seitliche Öffnung (131) für den Zugang zum Montageraum (130), derart, dass der Mahlmechanismus (3) in eine horizontale Richtung durch die seitliche Öffnung (131) aus dem Montageraum (130) entfernbar ist, beinhaltet.

7. Bohnenmahlmaschine nach Anspruch 6, die ferner durch einen Leistungsmechanismus (4) gekennzeichnet ist, wobei der Basissitz (1) ferner eine Basiswand (11) zum Stehen auf einer Fläche, und eine Umgebungswand (12), die sich von der Basiswand (11) nach oben erstreckt und dazu ausgelegt ist, einen Aufnahmeraum (120) zum Montieren des Leistungsmechanismus (4) darin zu definieren, beinhaltet, wobei die Bohnenmahlmaschine ferner einen Verriegelungsmechanismus (5) umfasst, der an der Montagewand (13) montiert und in horizontaler Richtung von der seitlichen Öffnung (131) entfernt ist.

8. Bohnenmahlmaschine nach Anspruch 1, **dadurch gekennzeichnet, dass**: das erste Mahlelement (32) nicht drehbar am Montagerahmen (31) montiert ist und das zweite Mahlelement (33) umgibt, wobei das zweite Mahlelement (33) drehbar am Montagerahmen (31) montiert ist, wobei die Bohnenmahlmaschine ferner einen Leistungsmechanismus (4) umfasst, der am Basissitz (1) montiert ist, wobei der Leistungsmechanismus (4) ein Antriebsrad (43), das angeordnet ist, einen Drehantrieb von einer Leistungsquelle zu empfangen, und ein Übertragungsrad (44), das in das Antriebsrad (43) eingreift, beinhaltet, wobei der Mahlmechanismus (3) ferner ein Abtriebsrad (34) beinhaltet, das in das Übertragungsrad (44) eingreift, um einen Drehantrieb, der vom Übertragungsrad (44) empfangen wird, zu übertragen, um das zweite Mahlelement (33) zu drehen.

9. Bohnenmahlmaschine nach Anspruch 1, **dadurch gekennzeichnet, dass**: der Mahlmechanismus (3) ferner eine Partikelgrößeneinstelleinheit (35) beinhaltet, die angeordnet ist, das erste Mahlelement (32) entlang einer aufrechten Achse relativ zum zweiten Mahlelement (33) zu bewegen, um eine Größe des Mahlraums (30) zu variieren, wobei die Partikelgrößeneinstelleinheit (35) eine Drehwelle (352), die um eine horizontale Achse drehbar am Montagerahmen (31) montiert ist und die ein Betätigungsende (351), um manuell betätigbar zu sein, und eine Kegelradanordnung (353), die die Drehwelle (352) und das erste Mahlelement (32) verbindet, um einen Drehantrieb der Drehwelle (352) um die horizontale Achse in einen Drehantrieb um die aufrechte Achse umzuwandeln, um das erste Mahlelement (32) entlang der aufrechten Achse zu bewegen, aufweist.

10. Bohnenmahlmaschine nach Anspruch 9, **dadurch gekennzeichnet, dass**: die Kegelradanordnung (353) ein erstes Kegelrad (354), das an die Drehwelle (352) gekoppelt ist und sich mit dieser um die horizontale Achse dreht, ein zweites Kegelrad (355) mit einem Kegelradabschnitt (3551), der in das erste Kegelrad (354) eingreift, und einem Übergangsradabschnitt (3552), der koaxial zum Kegelradabschnitt (3551) angeordnet ist, und einen ringförmigen Einstellsitz (356) mit einem ringförmigen Zahnabschnitt (357), der in den Übergangsradabschnitt (3552) eingreift, um um die aufrechte Achse gedreht zu werden, und einem Innengewindeabschnitt (358), der koaxial zum ringförmigen Zahnabschnitt (357) angeordnet ist, beinhaltet, wobei das erste Mahlelement (32) nicht drehbar am Montagerahmen (31) montiert ist und mit dem Innengewindeabschnitt (358) in Gewindeeingriff ist, derart, dass eine Drehung des ringförmigen Einstellsitzes (356) um die aufrechte Achse in einer Bewegung des ersten Mahlelements (32) entlang der aufrechten Achse resultiert.

11. Bohnenmahlmaschine nach Anspruch 1, ferner **gekennzeichnet durch** einen ersten Mikroschalter (6), der am Basissitz (1) angeordnet ist und vom Mahlmechanismus (3) geschaltet wird, wenn die Montage des Mahlmechanismus (3) am Basissitz (1) abgeschlossen ist.

12. Bohnenmahlmaschine nach Anspruch 11, **dadurch gekennzeichnet, dass**: der Bohnenbehälter (2) entfernbar am Basissitz (1) montiert ist, und die ferner einen zweiten Mikroschalter (7) umfasst, der am Basissitz (1) angeordnet ist und vom Bohnenbehälter (3) geschaltet wird, wenn die Montage des Bohnenbehälters (3) am Basissitz (1) abgeschlossen ist.

13. Bohnenmahlmaschine nach Anspruch 12, **dadurch gekennzeichnet, dass**: der Basissitz (1) eine Montagewand (13), die dazu ausgelegt ist, einen Montageraum (130) zum Montieren des Mahlmechanismus (3) darin zu definieren, eine seitliche Öffnung (131) für den Zugang zum Montageraum (130), derart, dass der Mahlmechanismus (3) in eine horizontale Richtung durch die seitliche Öffnung (131) aus dem Montageraum (130) entfernbar ist, und eine obere Öffnung (132), die angeordnet ist, zwischen dem Montageraum (130) und dem Bohnenbehälter (2) in räumlicher Interkommunikation zu sein, beinhaltet.

## Revendications

1. Machine de broyage de grains comprenant :
un siège de base (1) ;
un récipient de grains (2) monté sur ledit siège de base (1) pour contenir les grains à broyer ; et
un mécanisme de broyage (3), dans laquelle :
ledit mécanisme de broyage (3) est monté de manière amovible sur ledit siège de base (1) et comprend un premier élément de broyage (32) et un second élément de broyage (33) qui peuvent tourner l'un par rapport à l'autre et coopérer entre eux afin de définir un espace de broyage (30) pour recevoir les grains introduits par ledit récipient de grains (2) ;
ledit mécanisme de broyage (3) comprenant un bâti de montage (31) sur lequel lesdits premier et second éléments de broyage (32, 33) sont montés, ledit premier élément de broyage (32) pouvant se dégager dudit bâti de montage (31) ;
**caractérisée en ce que** :
ladite machine de broyage de grains comprend en outre un mécanisme de verrouillage (5) qui est disposé sur ledit siège de base (1) pour verrouiller ledit mécanisme de broyage (3) sur ledit siège de base (1), ledit bâti de montage (31) ayant un premier élément d'ancrage (313), ledit mécanisme de verrouillage (3) comprenant un second élément d'ancrage (51) qui est disposé afin d'être mobile par rapport audit siège de base (1) entre une position de verrouillage dans laquelle ledit second élément d'ancrage (51) est mis en prise avec ledit premier élément d'ancrage (313) afin de retenir ledit mécanisme de broyage (3) sur ledit siège de base (1) et une position de déverrouillage dans laquelle ledit second élément d'ancrage (51) est dégagé dudit premier élément d'ancrage (313) afin de permettre le dégagement dudit mécanisme de broyage (3) dudit siège de base (1).

2. Machine de broyage de grains selon la revendication 1, **caractérisée en ce que** : ledit mécanisme de broyage (3) est monté sur ledit siège de base (1) de sorte que ledit mécanisme de broyage (3) peut être dégagé dudit siège de base (1) dans une direction horizontale.

3. Machine de broyage de grains selon la revendication 1, **caractérisée en ce que** : ledit mécanisme de verrouillage (3) comprend un élément actionné (52) disposé pour être actionné afin de déplacer ledit second élément d'ancrage (51) dans la position de déverrouillage, ledit second élément d'ancrage (51) ayant une partie de pivot (511) monté de manière pivotante sur ledit siège de base (511), et une partie entraînée (512) et une partie d'ancrage (513) qui sont disposées au niveau des extrémités opposées de ladite partie de pivot (511) et pouvant se mettre respectivement en prise avec ledit élément actionné (52) et ledit premier élément d'ancrage (313), de sorte que la rotation de ladite partie de pivot (511) en actionnant ledit élément actionné (52) se traduit par le dégagement de ladite partie d'ancrage (513) dudit premier élément d'ancrage (313).

4. Machine de broyage de grains selon la revendication 3, **caractérisée en ce que** : ledit mécanisme de verrouillage (5) comprend un élément de sollicitation (53) disposé pour solliciter ledit second élément d'ancrage (51) vers la position de verrouillage.

5. Machine de broyage de grains selon la revendication 4, **caractérisée en ce que** : ledit premier élément d'ancrage (313) a une première surface d'attaque (315) faisant face et étant inclinée vers ledit second élément d'ancrage (51) et une première surface de fuite (316) s'étendant vers le haut à partir de ladite première surface d'attaque (315), ladite partie d'ancrage (513) ayant une seconde surface de fuite (514) faisant face et étant inclinée vers ledit premier élément d'ancrage (313), et une seconde surface d'attaque (515) s'étendant vers le haut à partir de ladite seconde surface de fuite (514) de sorte que ladite première surface de fuite (316) est amenée en butée contre ladite seconde surface d'attaque (515) en faisant passer ladite première surface d'attaque (315) sur ladite seconde surface de fuite (514) afin de retenir ledit premier élément d'ancrage (313) sur ledit second élément d'ancrage (51) lorsque ledit second élément d'ancrage (51) est dans la position de verrouillage.

6. Machine de broyage de grains selon la revendication 1, **caractérisée en ce que** : ledit siège de base (1) comprend une paroi de montage (13) configurée pour définir un espace de montage (130) pour y monter ledit mécanisme de broyage (3), et une ouverture latérale (131) pour avoir accès audit espace de montage (130) de sorte que ledit mécanisme de broyage (3) peut être retiré dudit espace de montage (130) dans une direction horizontale à travers ladite ouverture latérale (131).

7. Machine de broyage de grains selon la revendication 6, **caractérisée en outre par** un mécanisme d'alimentation (4), ledit siège de base (1) comprenant en outre une paroi de base (11) pour tenir sur une surface et une paroi périphérique (12) s'étendant vers le haut à partir de ladite paroi de base (11) et configurée pour définir un espace de logement (120) pour y monter ledit mécanisme d'alimentation (4), ladite machine de broyage de grains comprenant en outre un mécanisme de verrouillage (5) qui est monté sur ladite paroi de montage (13) et à distance de ladite ouverture latérale (131) dans la direction horizontale.

8. Machine de broyage de grains selon la revendication 1, **caractérisée en ce que** : ledit premier élément de broyage (32) est monté de manière non rotative sur ledit bâti de montage (31) et entoure ledit second élément de broyage (33), ledit second élément de broyage (33) étant monté en rotation sur ledit bâti de montage (31), ladite machine de broyage de grains comprenant en outre un mécanisme d'alimentation (4) qui est monté sur ledit siège de base (1), ledit mécanisme d'alimentation (4) comprenant un engrenage d'entraînement (43) qui est disposé pour recevoir un entraînement de rotation d'une source de puissance, et un engrenage de transmission (44) qui s'engrène avec ledit engrenage d'entraînement (43), ledit mécanisme de broyage (3) comprenant un engrenage entraîné (34) qui s'engrène avec ledit engrenage de transmission (44) pour transmettre un entraînement de rotation reçu par ledit engrenage de transmission (44) afin de faire tourner ledit second élément de broyage (33).

9. Machine de broyage de grains selon la revendication 1, **caractérisée en ce que** : ledit mécanisme de broyage (3) comprend en outre une unité d'ajustement de taille de particule (35) disposée pour déplacer ledit premier élément de broyage (32) par rapport audit second élément de broyage (33) le long d'un axe vertical afin de modifier une taille dudit espace de broyage (30), ladite unité d'ajustement de taille de particule (35) ayant un arbre rotatif (352) qui est monté en rotation sur ledit bâti de montage (31) autour d'un axe horizontal et qui a une extrémité actionnée (351) pour pouvoir être actionnée manuellement, et un ensemble d'engrenage conique (353) qui interconnecte ledit arbre rotatif (352) et ledit premier élément de broyage (32) pour convertir un entraînement de rotation dudit arbre rotatif (352) autour de l'axe horizontal en un entraînement de rotation autour de l'axe vertical afin de déplacer ledit premier élément de broyage (32) le long de l'axe vertical.

10. Machine de broyage de grains selon la revendication 9, **caractérisée en ce que** : ledit ensemble d'engrenage conique (353) comprend un premier engrenage conique (354) couplé à et entraîné en rotation avec ledit arbre rotatif (352) autour de l'axe horizontal, un second engrenage conique (355) ayant une partie d'engrenage conique (3551) qui s'engrène avec ledit premier engrenage conique (354) et une partie d'engrenage de transmission (3552) qui est disposée de manière coaxiale avec ladite partie d'engrenage conique (3551), et un siège annulaire d'ajustement (356) ayant une partie dentée annulaire (357) qui s'engrène avec ladite partie d'engrenage de transition (3552) pour être entraîné en rotation autour de l'axe vertical, et une partie intérieurement filetée (358) qui est disposée de manière coaxiale avec ladite partie dentée annulaire (357), ledit premier élément de broyage (32) étant monté de manière non rotative sur ledit bâti de montage (31) et mis en prise par filetage avec ladite partie intérieurement filetée (358) de sorte que la rotation dudit siège annulaire d'ajustement (356) autour de l'axe vertical se traduit par le déplacement dudit premier élément de broyage (32) le long de l'axe vertical.

11. Machine de broyage de grains selon la revendication 1, **caractérisée en outre par** un premier micro-commutateur (6) disposé sur ledit siège de base (1) et actionné par ledit mécanisme de broyage (3) lorsque le montage dudit mécanisme de broyage (3) sur ledit siège de base (1) est terminé.

12. Machine de broyage de grains selon la revendication 11, **caractérisée en ce que** : ledit récipient de grains (2) est monté de manière amovible sur ledit siège de base (1), et comprenant en outre un second micro-commutateur (7) disposé sur ledit siège de base (1) et actionné par ledit récipient de grains (3) lorsque le montage dudit récipient de grains (3) sur ledit siège de base (1) est terminé.

13. Machine de broyage de grains selon la revendication 12, **caractérisée en ce que** : ledit siège de base (1) comprend une paroi de montage (13) configurée pour définir un espace de montage (130) pour y monter ledit mécanisme de broyage (3), une ouverture latérale (131) pour avoir accès audit espace de montage (130) de sorte que ledit mécanisme de broyage (3) peut être retiré dudit espace de montage (130) dans une direction horizontale à travers ladite ouverture latérale (131), et une ouverture supérieure (132) disposée pour être en intercommunication spatiale entre ledit espace de montage (130) et ledit récipient de grains (2).
